Europäisches Patentamt

European Patent Office

Office européen des brevets

(19)

(11) Publication number: **0 125 191**
A2

(12) **EUROPEAN PATENT APPLICATION**

(21) Application number: 84420079.0

(22) Date of filing: 27.04.84

(51) Int. Cl.³: **E 21 B 43/27**

(30) Priority: 02.05.83 US 490582
09.01.84 US 569299

(43) Date of publication of application:
14.11.84 Bulletin 84/46

(84) Designated Contracting States:
AT BE CH DE FR GB IT LI LU NL SE

(71) Applicant: CAPETROL INTERNATIONAL, INC.
3500 West Robinson St Suite 204
Norman Oklahoma 73070(US)

(72) Inventor: Garcia, Silverio M.
2416 Osborne Drive
Norman Oklahoma 73069(US)

(74) Representative: Laurent, Michel et al,
20 rue Louis Chirpaz Boite Postale 32
F-69130 Lyon-Ecully(FR)

(54) Improved acidic compositions for use in acidizing hydrocarbon bearing subterranean formations and method for using same.

(57) Aqueous acidic compositions employed in the acidizing of hydrocarbon bearing subterranean formations comprising aqueous amine modified acidic compositions and mixtures of an acid constituent with the aqueous amine modified acid compositions. The aqueous amine modified acidic compositions employed in the acidizing of a hydrocarbon bearing subterranean formation are produced by the following steps:

   (1)   mixing hydrochloric acid with phosphoric acid;

   (2)   admixing the acidic mixture with water;

   (3)   admixing of a hydroxy carboxylic acid into the aqueous acidic mixture; and

   (4)   admixing a minor effective amount of a polyamine constituent.

EP 0 125 191 A2

IMPROVED ACIDIC COMPOSITIONS FOR USE IN ACIDIZING HYDROCAR-
BON BEARING SUBTERRANEAN FORMATIONS AND METHOD FOR USING
SAME.

## Background of the Invention

### 1. Field of the Invention

The present invention relates to acidic compositions
for use in acidizing a hydrocarbon bearing subterranean
formation, and more particularly, but not by way of
limitation, to improved aqueous acidic compositions
having pH values of less than about 1 for use as acidizing agents in the acidizing of subterranean well formations.  In another aspect the present invention relates
to a method for acidizing a hydrocarbon bearing subter-
ranean formation utilizing aqueous acidic compositions
having pH values of less than about 1.

### 2. Discussion of Prior Art

Aqueous acidic compositions have heretofore been
known and employed as acidic treating fluids for acidizing and fracturing subterranean formation to increase the
recovery of hydrocarbons from such subterranean formations.   In an acidizing procedure the acidic treating fluid is introduced into the well formation under pressure so that the treating fluid flows into the pore spaces of the formation.   The acidic treating fluid reacts with materials in the formation so that the pore spaces are enlarged which results in an increase in the permability of the formation.   In fracture acidizing procedures, one or more fractures are produced in the formation and the acidic treating fluids are introduced into the fractures to etch flow channels therein and/or to enlarge the pore spaces in the fracture faces and in the formation.

One major problem heretofore encountered in the acidizing of a subterranean formation has been the acid constituent of the acidic treating fluids becoming prematurely spent and inactive.   To overcome such problem gelling agents, such as hydratable carboxyl substituted polysaccharides, hydratable partially hydrolized polyacrylamides, hydratable xanthan polymers, and the like have been incorporated into the aqueous acidic compositions to increase the vicosity of the aqueous acidic compositions.

Another problem encountered in the use of the acidic composition in acidizing and fracture acidizing of subterranean formations is the limited amount of the acidic component which can be incorporated into the acidic treating compositions because of the general corrosive nature of the acidic compositions.   For example, most of the acidic compositions heretofore employed in the acidizing and fracture acidizing of subterranean formations have employed less than about 20 percent of an acidic component, such as hydrochloric acid. Because of the viscous and corrosive nature of such acidizing compositions, friction reducers and corrosion inhibitors have been incorporated into the acidizing composition in an effort to improve the pumping characteristics of the acidizing composition and to protect the pumping and well equipment.

An exception to the acidizing compositions heretofore generally employed in the acidizing and fracture acidizing of subterranean formations in an effort to improve hydrocarbon recovery from such formations is the so called "bomb-acidizing" process. The "bomb-acidizing" process employed 100 percent technical grade hydrochloric acid (20° - 22° Baume) as the acidizing composition to acidize hydrocarbon bearing subterranean formations. Although the use of the 100 percent technical grade hydrochloride as an acidizing fluid improved the flow characteristics of hydrocarbons from the treated subterranean formations, many problems were encountered in the use of such acidizing fluid which rendered the "bomb-acidizing" process unacceptable and impractical. Three of the greatest problems encountered in using 100 percent technical grade hydrochloric acid as the acidizing fluid were (1) the highly concentrated hydrochloric acid was extremely dangerous to human health and tissues; (2) the strongly acidic properties of the hydrochloric acid corroded and substantially damaged or destroyed the tanks, pumps and pipes it contacted during injection into the subterranean formation; and (3) the hydrochloric acid corroded the tubing and well casings of the wells so as to greatly reduce the tensile strength and thus increase the probability of leaks and/or collapse of the tubing and well casings.

Because the acidic component in the acidic treating fluids is the active component, it would be highly desirable to provide a method for acidizing and fracture acidizing a subterranean formation wherein the concentration of the acidic component could be greatly increased, and yet where the aqueous acidic treating fluids would be substantially inert until activated in the subterranean formation. In other words, it would be highly desirable to provide a method for acidizing a subterranean formation wherein the aqueous acidic composition would contain a substantial amount of the acidic constituent and which could be handled without fear of physical harm to the user, which would not cause damage or destruction of the well equipment, including the casing, and which would enable the acidic treating fluid to exhibit the desired acidic functions when brought into contact with selected surfaces in the subterranean formation.

## Summary of the Invention

The present invention provides an improved method for acidizing a subterranean well formation with aqueous amine modified acidic compositions having pH values of less than about 1. In one aspect, the present invention provides aqueous amine modified acidic compositions and resulting aqueous acidic treating fluids for use as acidizing agents in the acidizing of hydrocarbon bearing subterranean formation. The aqueous amine modified acidic compositions and the resulting aqueous acidic treating fluids employed in the acidizing of a subterranean formation are substantially inert and inactive until contacted with a surface or substance in the subterranean formation on which activity of the compositions is desired.

Broadly, the method for treating a subterranean formation comprising the step of injecting an effective amount of an aqueous amine modified acidic composition into the subterranean formation. The aqueous amine modified acidic composition employed in the method for acidizing a subterranean well formation is prepared by the steps of:

(a) mixing from about 45 to about 80 weight percent hydrochloric acid with from about 20 to about 55 weight percent phosphoric acid to produce a substantially homogeneous acidic mixture;

(b) admixing the acidic mixture with an effective amount of water to provide an aqueous acidic mixture;

(c) admixing from about 2 to about 20 weight percent of a hydroxy carboxylic acid into the aqueous acidic mixture to produce a hydroxy carboxylic acid containing aqueous acidic mixture; and

(d)   admixing a minor effective amount of a polyamine constituent compatible with the hydroxy carboxylic acid containing aqueous acidic mixture to provide the amine modified aqueous acidic composition.

In one aspect, the present invention provides a method for treating a subterranean formation comprising the steps of mixing an effective amount of an acidic constituent with the aqueous amine modified acidic composition to produce a resulting aqueous acidic treating fluid, and introducing the resulting aqueous acidic treating fluid into the subterranean formation.

The aqueous amine modified acidic composition prepared in accordance with the process steps set forth above, upon mixing with the effective amount of the acidic constituent provides the resulting aqueous acidic treating fluid with pH values of less than about 1.  The resulting aqueous acidic treating fluid is substantially inert and inactive until contacted with a surface or substance in the subterranean formation on which activity of such composition is desired.

An object of the present invention is to provide improved acidizing agents for use in the acidizing of hydrocarbon bearing subterranean formations.

Another object of the present invention, while achieving the above stated object, is to provide an improved method for acidizing a subterranean well formation.

Another object of the present invention, while achieving the above stated objects, is to provide an improved method for acidizing a subterranean formation which does not require the use of gelling agents, crosslinking agents, friction reducers, corrosion inhibitors, and the like.

Another object of the present invention, while achieving the above stated objects, is to provide an improved method for acidizing a subterranean well formation employing highly acidic treating fluids which does not cause substantial damage or risk of injury to the user or equipment.

Other objects, advantages and features of the present invention will be apparent from the following detailed description when read in conjunction with the appended claims.

### Description of Preferred Embodiments

The present invention provides improved acidizing agents and methods for acidizing a hydrocarbon bearing subterranean well formation. The method for acidizing a hydrocarbon bearing subterranean well formation comprises injecting an effective amount of an aqueous amine modified acidic composition, or a resulting aqueous acidic treating fluid, each having a pH value of less than about 1, into the subterranean formation. The resulting aqueous acidic treating fluid is formulated by admixing an effective amount of an acidic constituent with the aqueous amine modified acidic composition prior to injection of the resulting aqueous acidic treating fluid into the subterranean formation.

The aqueous amine modified acidic compositions and the resulting aqueous acidic treating fluids employed in the acidizing of the subterranean formations in accordance with the present invention possess unique properties in that such compositions have strong acidic properties (i.e. pH values of less than about 1), and yet are substantially inert until activated, such as upon delivery of the compositions to the subterranean formation which contains ions capable of activating the acidic property of the compositions.

The exact structure and function of the aqueous amine modified acidic compositions and the resulting aqueous acidic treating fluids employed in the present invention are not known. However, one theory is that during the mixing of the acidic constituents employed n the formulation of the aqueous amine modified acidic compositions a high concentration of hydrogen ions (H+) are released into and remain present in the aqueous amine modified acidic compositions. Thus, when the aqueous amine modified acidic compositions are mixed with additional acid constituents to produce the resulting aqueous acidic treating fluids, the high concentration of hydrogen ions present in the aqueous amine modified acidic compositions prohibits the release of hydrogen ions from the acid molecules of the additional acid constituents, and thus the resulting aqueous acidic treating fluids. Because the acid molecules cannot release their hydrogen ions, the compositions (i.e. the amine modified acidic compositions and the resulting aqueous treating fluids) remain substantially inert and inactive until the compositions come into contact with an active surface (i.e. a surface that can accept large quantities of hydrogen atoms). Upon contact with the active surface the acid molecules present in the compositions become active as long as the compositions remain in contact with the active surface, and as long as the surface contains substances to exchange with the hydrogen ions present in the compositions. When the surface has been cleaved of its active substances the surface becomes passivated so that the exchange of the hydrogen ions discontinues and the surface is again inactivated and the aqueous amine modified acidic compositions and the resulting aqueous acidic treating fluids become substantially inactive and inert.

The term "pH value" is generally employed as a means for expressing the degree of acidity or basicity of a solution. For example, at normal temperature a neutral solution, such as pure distilled water, has a pH of about 7; whereas a 1/10th normal solution of hydrochoric acid (approximately 3.65 grams hydrochloric acid per liter of water) has a pH near 1 and is considered to be strongly acidic. Thus, the aqueous amine modified acidic compositions and the resulting aqueous acidic treating fluids, each of which has pH values of less than about 1, would be considered very strongly acidic, and would be very difficult to handle except for their unique substantially inactive and inert properties until selectively activated by contact with a surface capable of activating such compositions.

As previously stated, the exact structure of the aqueous amine modified acidic composition employed as the acidizing agent in the treatment of the subterranean formation is not known. Likewise, the structure of the resulting aqueous acidic treating fluid employed as the acidizing agent and the function of aqueous amine modified acidic composition on the additional acidic constituent of the resulting aqueous acidic treating fluid, including the effect of the resulting treating fluid on the subterranean formation, is also not known. However, the aqueous amine modified acidic compositions are prepared by a process wherein the ingredients are believed critical. The order of addition of the acidic components used in the formulation of the aqueous amine modified acidic compositions can be varied without substantially altering the properties of the aqueous amine modified acidic compositions. However, especially desirable results have been obtained when the aqueous amine modified acidic compositions are prepared in accordance with the following procedure.

The initial step of the process for preparing the aqueous amine modified acidic compositions for use as an acidizing agent of a subterranean formation, either alone or in combination with an additional acidic constituent, comprises admixing from about 45 to about 85 weight

- 11 -

0125191

percent hydrochloric acid and from about 20 to about 55 weight percent phosphoric acid in a vessel for an effective period of time to provide a substantially homogeneous acidic mixture. Because strong fumes are emitted upon mixing the hydrochloric acid and the phosphoric acid, care should be excercised in the mixing of the two components to ensure that the mixing step is carried out in a well ventilated area or hood.

The time required to mix the hydrochloric acid and the phosphoric acid so as to provide a substantially homogeneous acidic mixture can vary widely; and the mixing time or period will generally depend upon the rate of addition of the two components, the amount of the two components, the rate of speed of agitation and the like.

All mixing and storage containers employed in the production of the aqueous amine modified acidic compositions are desirably fabricated of a substance that is acid resistant, such as stainless steel, plastic, fiberglass, glass and the like. It is desirable also that all containers used in the preparation of the aqueous amine modified acidic compositions be provided with covers for safety reasons and to keep foreign materials out of the product, especially the container in which the hydrochloric acid and phosphoric acid are mixed.

The homogeneous acidic mixture formed from the hydrochloric acid and the phosphoric acid is then admixed with an effective amount of water to provide an aqueous acidic mixture. The amount of water employed in the formation of the aqueous acidic mixture can vary widely but is generally an amount sufficient to provide from about 70 to about 90 weight percent water in the aqueous acidic mixture. The aqueous acidic mixture is thoroughly stirred to ensure substantially complete dispersion of the homogeneous acid mixture of the hydrochloric acid and the phosphoric acid into the water, and to provide a substantially uniform aqueous acidic mixture.

While maintaining agitation on the aqueous acidic mixture, from about 2 to about 20 weight percent of a hydroxy carboxylic acid and from 0 to about 20 weight percent of a dicarboxylic acid are admixed with the aqueous acidic mixture to produce an aqueous acidic composition having a pH value of less than about 1. The hydroxy carboxylic acid is a critical ingredient in the formation of the aqueous acidic compositions; whereas the dicarboxylic acid is an optional ingredient. However, desirable results have been obtained when producing an aqueous acidic composition containing the dicarboxylic acid ingredient.

The amount of hydroxy carboxylic acid and dicarboxylic acid incorporated into the aqueous acidic mixture of the hydrochloric acid and phosphoric acid can vary widely within the ranges set forth hereinabove. However, the optimum amounts of the hydroxy carboxylic acid and the dicarboxylic acid admixed with the aqueous acidic mixture are the amounts required to provide from about 2 to about 10 weight percent of the hydroxy carboxylic acid in the aqueous acidic composition, and from about 1 to

- 13 -                                 0125191

about 10 weight percent of the dicarboxylic acid into the aqueous acidic composition. The order of addition of the dicarboxylic acid and the hydroxy carboxylic acid is not critical, although desirable results have been obtained when the dicarboxylic acid constituent is introduced into the aqueous acidic mixture after the addition of the hydroxy carboxylic acid.

Any suitable hydroxy carboxylic acid can be employed in the preparation of the aqueous amine modified acidic compositions used in the practice of the present invention. Typical of such hydroxy carboxylic acids are citric acid, tartaric acid, malic acid, and the like. However, especially desirable results have been obtained wherein the hydroxy carboxylic acid added to the aqueous acidic mixture is citric acid.

Any suitable dicarboxylic acid can be employed in the preparation of the aqueous amine modified acidic compositions used in the practice of the present invention. Typical of such dicarboxylic acids are oxalic acid, malonic acid, succinic acid, glutaric acid, adipic acid, and the like. However, when employing a dicarboxylic acid in the preparation of the aqueous amine modified acidic compositions, desirable results have been obtained when the dicarboxylic acid added to the aqueous acidic mixture is oxalic acid.

The aqueous acidic compositions so produced will desirably contain from about 70 to about 90 weight percent water, and more desirably from about 75 to about 80 percent water. Thus, depending upon the amounts of the hydroxy carboxylic acid and the dicarboxylic acid added to the aqueous acidic mixture, as well as the amount of water initially added to the acidic mixture formed by the hydrochloric acid and the phosphoric acid, it may be desirable to further dilute the aqueous acidic composition with an effective amount of water to insure that the concentration of water in the aqueous acidic composition is from about 70 to about 90 weight percent, more desirably from about 75 to about 80 weight percent. In those instances where it is determined that the amount of water present in the aqueous acidic composition is less than the specified amount, the aqueous acidic composition is admixed with an effective amount of water so as to provide the aqueous acidic compositions with the amount of water specified above.

The aqueous acidic compositions prepared by the process described above are substantially colorless liquids having an appearance substantially similar to water. The aqueous acidic compositions, which contain from about 70 to about 90 percent water and have pH values of less than about 1 (i.e. about 0.49), are thereafter mixed with a minor effective amount of a polyamine to produce the amine modified aqueous acidic compositions having pH values of less than about 1 (i.e. about 0.91). The minor effective amount of the polyamine incorporated into the aqueous acidic compositions can vary widely, but will generally range from about 1 to about 5 weight percent. Any suitable polyamine compatible with the aqueous acidic composition can be employed. Typical of such polyamines are hexamethylenetetramine, hexamethylenediamine, hexamethyleneimine, and the like. Desirable results have been obtained wherein the polyamine is hexamethylenetetramine, and the hexamethylenetetramine is incorporated into the aqueous acidic compositions in an amount of from about 2 to about 3 weight percent.

As previously stated, the water content of the aqueous acidic compositions is generally from about 70 to about 90 weight percent, and desirably from about 75 to about 80 weight percent. Thus, upon addition of the polyamine to the aqueous acidic compositions to produce the aqueous amine modified acidic compositions, it may be desirable to further dilute the aqueous acidic compositions with an effective amount of water such that upon addition of the polyamine the amine modified aqueous acidic compositions contain from about 70 to about 90 weight percent water, more desirably from about 75 to about 80 weight percent water.

The aqueous amine modified acidic compositions prepared as described above can thereafter be employed as the acidizing agent in the acidizing of a subterranean hydrocarbon bearing formation; or the aqueous amine modified acidic compositions can be mixed with an effective amount of an additional acidic constituent to form the resulting aqueous acidic treating fluids used in acidizing a subterranean formation in accordance with the present invention.

The acidic constituent mixed with the aqueous amine modified acidic composition to form the resulting aqueous acidic treating fluid can be any suitable acid, including inorganic acids and organic acids. The amount of the acidic constituent mixed with the aqueous amine modified acidic composition to produce the resulting aqueous acidic treating fluid can vary widely, but generally will be an effective amount to provide from about 1 to about 85 weight percent of the acidic constituent in the resulting aqueous acidic treating fluid. Thus, the amount of the aqueous amine modified acidic composition will be present in the resulting aqueous acidic treating fluid in an amount of from about 15 to about 99 weight percent. Generally, however, the amount of acidic constituent mixed with the aqueous amine modified acidic composition to produce the resulting aqueous acidic treating fluids for use in the methods of treating a subterranean formation in accordance with the present invention will be an amount effective to provide from about 30 to about 80 weight percent of the acidic constituent in the resulting aqueous acidic treating fluid, and from about 20 to about 70 weight percent of the aqueous amine modified composition in the resulting aqueous acidic treating fluid.

As previously stated, the acidic constituent employed in the formation of the resulting aqueous acidic treating fluid can be any suitable inorganic or organic acid. The only requirement is that the selection of the

- 17 -

0125191

acidic constituent be one which is soluble in the aqueous amine modified acidic compositions. Typical of the inorganic acids which may be employed as the acidic constituent in the formation of the resulting aqueous acidic treating fluid are hydrochloric acid, hydrofluoric acid, sulfuric acid, nitric acid, aqua regia, mixtures thereof, and the like; whereas typical of organic acids which can be employed as the acidic constituent in the formation of the aqueous acidic treating fluid are acetic acid, lauric acid, oleic acid, citric acid, and the like.

When introducing the resulting aqueous acidic treating fluids into a subterranean formation containing clay and/or silica, the acidic constituent admixed with the aqueous amine modified acidic composition to produce the resulting aqueous acidic treating fluids is desirably an inorganic acid selected from the group consisting of hydrochloric acid and a mixture of hydrochloric acid and hydrofluoric acid. When employing a mixture of hydrochloric acid and hydrofluoric acid as the acid constituent in the formation of the resulting aqueous acidic treating fluid, the amounts of the hydrochloric acid and the hydrofluoric acid can vary widely. Generally, however, the mixture of the hydrochloric acid and hydrofluoric acid will be employed in an amount sufficient to provide from about 1 to about 85 weight percent, desirably from about 30 to about 80 weight percent of the acid mixture, in the resulting aqueous acidic treating fluid. The ratio of the hydrochloric acid and the hydrofluoric

0125191

acid used in the acid mixture can also vary widely, but sufficient amounts of hydrochloric acid and hydrofluoric acid will be mixed to provide an acid mixture containing from about 50 to about 99 weight percent hydrochoric acid and from about 1 to about 50 weight percent hydrofluoric acid, and more desirably from about 75 to about 99 weight percent hydrochloric acid and from about 1 to about 25 weight percent hydrofluoric acid.

The aqueous amine modified acidic compositions, when mixed with the acidic constituent to provide the resulting aqueous acidic treating fluid, imparts the substantially inactive and inert characteristics of the aqueous amine modified acidic compositions to the resulting aqueous acidic treating fluids, even though the resulting aqueous acidic treating fluids contain strong acidic constituents, such as hydrochloric acid and mixtures of hydrochloric acid and hydrofluoric acid. Thus, the resulting aqueous acidic treating fluid remains in a substantially inactive or inert state except when the resulting aqueous acidic treating fluid is introduced into the subterranean formation and contacts a surface having the desired properties to activate the resulting aqueous acidic treating fluid.

The aqueous amine modified acidic compositions and/or resulting aqueous acidic treating fluids prepared as described above can be introduced into the subterranean formation by standard techniques known in the art. The amine modified acidic compositions and the resulting aqueous acidic treating fluids will generally have viscosities substantially equal to the viscosity of water so that the pumping rate of such compositions can easily and effectively be increased over the high viscosity products heretofore used in the acidizing of a subterranean formation.

The resulting aqueous acidic treating fluids can be prepared "off-sight" at a commercial blending facility and shipped to the well site in tank trucks and the like; or more desirably the resulting aqueous acidic treating fluids will be blended in a blending tank at the well site. However, when blending the resulting aqueous acidic treating fluids at the well site, the aqueous amine modified acidic compositions employed in the formulation of the resulting aqueous acidic treating fluid are desirably prepared at a commercial blending facility and shipped to the well site in tank trucks, barrels and the like.

Because of the substantially inert, inactive properties of the aqueous amine modified acidic compositions until contacted with an appropriate surface for activation of the aqueous amine modified acidic compositions, and the ability of the aqueous amine modified acidic composition to impart such properties to the acidic constituent blended with the aqueous amine modified acidic composition in formulating the resulting aqueous acidic treating fluids, substantially no corrosion occurs in the tank truck, barrels, mixing vessels, and the like. Further, the health hazards generally experienced in handling of strongly acidic compositions in the acidizing of subterranean hydrocarbon bearing formations are not encountered when using the acidizing agents of the present invention.

After the desired amount of the aqueous amine modified acidic composition or the resulting aqueous acidic treating fluid has been introduced into the subterranean formation, the well is subjected to a "flow back" procedure to recover the spent treating fluids. The spent treating fluids recovered from the subterranean formation via the well bore as a result of the "flow back" procedure (i.e. the aqueous amine modified acidic composition or the resulting aqueous acidic treating fluid) will generally have a pH of from about 3 to about 7. Further, the spent treating fluids will possess the unique, substantially inert, inactive properties of the aqueous amine modified acidic composition and the resulting aqueous acidic treating fluids so that material contacts with the spent treating fluid will not be corroded or damaged. The spent treating fluid can be disposed of in any suitable manner, such disposal methods being well known in the art for disposing of spent acid compositions heretofore employed in the treatment of subterranean well formations.

Another unique property of the aqueous amine modified acidic compositions and the resulting aqueous acidic treating fluids employed in the acidizing of a hydrocarbon bearing subterranean formation in accordance with the present invention is the composition's or fluid's ability

- 21 -                          0125191

to suspend large quantities of iron compounds.  The improved ability to suspend the iron compounds assist in
"unplugging" subterranean formations having a high clay
content since the spent treating fluid recovered from the
formation will remove the iron salts from the formation
via the well bore.  The removal of the iron salts pre-
vents plugging and blocking of the pores opened in the
subterranean formation by the in situ action of the
aqueous amine modified compositions or the resulting
aqueous acidic treating fluids on the subterranean formation.

Further, because of the ability to mix large amounts
of acidic constituents with the aqueous amine modified
acidic composition in the production of the resulting
aqueous acidic treating fluid, larger quantities of the
acid constituent, such as hydrofluoric acid and mixtures
of hydrochloric and hydrofluoric acid, can be incorporated into the aqueous amine modified acidic composition to produce the resulting aqueous acidic treating
fluid useful in treating subterranean formations having
high silica and clay contents.

Yet another unexpected property of the resulting
aqueous acidic treating fluids appears to be the effect
on the subterranean formtion by the resulting aqueous
acidic treating fluid, such as the rapid temperature
increase in the formation and the pressures generated in
the formation as a result of the action of the resulting
aqueous acidic treating fluid on the formation.  For example, it has been detected that upon introducing the resulting aqueous acidic treating fluid into the subterranean formation the bottom hole temperature rapidly increases to about 120°F above previous formation temperature. This rapid temperature increase is believed to "cook-off" some of the light-end hydrocarbons in the formation so as to form a gas which instantly creates a high pressure in the formation. The increased pressure in the formation is believed to force the gas into the pore openings in the formation which results in a partial fracturing of the formation so as to allow the resulting aqueous acidic treating fluid to reach much deeper into the subterranean formation than has been possible with prior high viscosity treating fluids. Thus, it is believed that the method of treating a subterranean formation employing the resulting aqueous acidic treating fluids having pH values of less than about 1 will be more productive than has heretofore been possible using the prior art acidic treating fluids.

In order to more fully describe the present invention the following examples are set forth. It is to be understood that the examples are for illustrative purposes only and are not to be construed as limiting upon the scope of the invention as set forth in the appended claims.

EXAMPLE I

Preparation of Amine Modified Acidic Composition

A plurality of batches of the aqueous amine modified acidic compositions useful in the treating of a subterranean formation in accordance with the present invention were prepared as follows.

71.38 pounds of hydrochloric acid and 41.50 pounds of phosphoric acid were added to a container and the acids were stirred to produce a substantially homogeneous acidic mixture. During the mixing of the hydrochloric acid and the phosphoric acid fumes were generated. Thus, the mixing of the hydrochloric acid and the phosphoric acid was carried out in a ventilated area.

332 pounds of clean water was then placed into a second container. 112.88 pounds of the hydrochloric - phosphoric acid mixture was added to the water in the second container. The resulting aqueous acidic solution was mixed thoroughly. Thereafter, 21.58 pounds of powdered citric acid and 14.94 pounds of powdered oxalic acid were admixed into the aqueous acidic mixture to produce an aqueous acidic composition.

The aqueous acidic composition was then diluted by admixing 481.40 pounds of the aqueous acidic composition with 332 pounds of clean water in a third container. The aqueous acidic composition and water were thoroughly stirred and provided 97 gallons (814 pounds) of the aqueous acidic composition. Following the dilution of the aqueous acidic composition described above, 16.6 pounds of hexamethylenetetramine was admixed into 814 pounds of the aqueous acidic composition and mixing continued until a substantially homogeneous colorless liquid was formed. An aqueous amine modified aqueous acidic composition having a volume of 100 gallons and a total weight of 830 pounds was formed using the procedure. It should be noted that the mixing and storage containers employed in the preparation of the aqueous amine modified acidic composition were fiberglass containers, and each of the containers were covered for safety reasons and to prevent foreign materials from being introduced into the product.

The aqueous amine modified acidic composition was then transported to well sites, and mixed with technical grade hydrochloric acid to form the resulting aqueous acidic treating fluid. The resulting aqueous acidic treating fluid was thereafter injected into a hydrocarbon bearing subterranean formation using the procedures set forth hereinafter in Examples II, III, IV and V.

## EXAMPLE II

A well was treated using a resulting aqueous treating fluid formed of a mixture of technical grade hydrochloric acid and the aqueous amine modified acidic composition prepared in accordance with the procedure of Example I. The well was located in Noble County, Oklahoma, and was producing limited quantities of oil and gas from the Mississippi zone at a depth of 5100 feet. Upon completion of the well in 1979 the well produced 17 barrels of oil per day and 100,000 cubic feet of gas per day. At the time of treatment the production of the well had dropped off to 4.5 barrels of oil per day and 30,000 cubic feet of gas per day.

In an effort to improve the production of hydrocarbons from the subterranean formation the following acidizing treatment was carried out. 120 barrels of a resulting aqueous treating fluid formed by mixing 4250 gallons of hydrochloric acid and 880 gallons of aqueous amine modified acidic composition prepared in accordance with Example #1 were injected into the subterranean formation via the well bore using standard acidizing techniques at a rate of 27.5 barrels per minute, and at a pressure of 550 psi. The pressure rose during the injection of the resulting aqueous treating fluid to a pressure of 1400 psi. The initial shut-in pressure on the well was 200 psi which fell to 0 after five minutes.

After treatment of the subterranean formation 100 barrels of the spent treating fluid was recovered. The spent treating fluid had a pH between 3 and 7, and appeared to still possess the substantially inert, inactive properties of the resulting aqueous treating fluid.

The treatment of the subterranean formation did not appear to be successful because after treatment the production of the well was 3 barrels of oil per day and 30,000 cubic feet of gas per day. It is believed that

- 26 -

the well did not respond to treatment because of the
lack of recoverable petroleum reserves.

## EXAMPLE III

A well was treated using a resulting aqueous treating fluid formed of a mixture of technical grade hydrochloric acid and the aqueous amine modified acidic composition prepared in accordance with the procedure of Example I. The well was located in Marshall County, Oklahoma, and was producing limited quantities of oil at a depth of 3530 feet. Upon initial completion of the well, the well produced 180 barrels of oil per day. At the time of treatment the production of the well had dropped off to 0.5 barrels of oil per day and 2 barrels of water per day.

In an effort to improve the production of hydrocarbons from the subterranean formation the following acidizing treatment was carried out. 112 barrels of a resulting aqueous treating fluid formed by mixing 3900 gallons of hydrochloric acid and 800 gallons of aqueous amine modified acidic composition prepared in accordance with Example #1 were injected into the subterranean formation via the well bore using standard acidizing techniques at a rate of 5 barrels per minute, and at an averge pressure of 500 psi. The initial shut-in pressure on the well was 500 psi, but after 5 minutes a vacuum was indicated.

The treatment of the subterranean formation did not appear to be successful because the resulting aqueous treating fluid apparently escaped from the formation. It is believed that the well did not respond to treatment because the resulting aqueous treating fluid opened a channel in the formation which resulted in the resulting aqueous treating fluid being drained off and lost.

### EXAMPLE IV

A well was treated using a resulting aqueous treating fluid formed of a mixture of technical grade hydrochloric acid and the aqueous amine modified acidic composition prepared in accordance with the procedure of Example I. The well was located in Pottawatomie County, Oklahoma, and was producing limited quantities of oil from the Hunton zone at a depth of 4366 feet. At the time of treatment the production of the well was 2 barrels of oil per day and 5 barrels of water per day.

In an effort to improve the production of hydrocarbons from the subterranean formation the following acidizing treatment was carried out. 108 barrels of a resulting aqueous treating fluid formed by mixing 3900 gallons of hydrochloric acid and 650 gallons of aqueous amine modified acidic composition prepared in accordance with Example #1 was injected into the subterranean formation via the well bore using standard acidizing techniques at a rate of 6 barrels per minute, and at an average pressure of 700 psi. The initial shut-in pressure on the well was 700 psi which continued to hold after five minutes.

After treatment of the subterranean formation the recovered amount of the spent treating fluid could not be measured because it came out of the formation with a mixture of oil and water.

The treatment of the subterranean formation using the resulting aqueous treating fluid increased the flow of liquid from the formation to more than 2600 barrels per day. The liquid was a mixture of water and oil (4% oil). Thus, the oil fraction removed from the formation was increased to about 104 barrels per day by the treatment of the present invention. Because of the large amount of water produced a submergible pump was placed in the well in an attempt to pump off a substantial quantity of water prior to attempting to recover the oil fraction.

## EXAMPLE V

A well was treated using a resulting aqueous treating fluid formed of a mixture of technical grade hydrochloric acid and the aqueous amine modified acidic composition prepared in accordance with the procedure of Example I. The well, which was located in Bryan County, Oklahoma, and was drilled in 1952 to a depth of 3442 feet, initially produced oil from the Viola zone at a rate of 140 barrels per day.

In 1979 the formation was fractured using 20,000 pounds of 100 mesh sand and 25,000 gallons of gel water (595 barrels). After fracturing the formation the well produced 200 barrels of water per day and 28,000 cubic feet of gas per day.

In an effort to improve the production of hydrocarbons from the subterranean formation the following acidizing treatment was carried out. 110 barrels of a resulting aqueous treating fluid formed by mixing 4125 gallons of hydrochloric acid and 500 gallons of aqueous amine modified acidic composition prepared in accordance with Example #1 were injected into the subterranean formation via the well bore using standard acidizing techniques at an initial rate of 6 barrels per minute and a final rate of 55 barrels per minute. The pressure during the injection of the resulting aqueous treating fluid varied between 1000 psi and 1250 psi. The initial shut-in pressure on the well was 600 psi, but after 5 minutes a vacuum was indicated.

After treatment of the subterranean formation none of the spent treating fluid was recovered. However, after the treatment of the formation with the resulting aqueous treating fluid the production of gas from the formation was increased to 200,000 cubic feet of gas per day.

The above examples, especially Examples IV and V, clearly indicated the method for acidizing a hydrocarbon bering subterranean formation using the resulting aqueous treating fluids as acidizing agent to improve the hydrocarbon recovery from the formation.

## EXAMPLE VI

A series of experiments were conducted to determine the reactivity of calcium carbonate with a resulting aqueous treating fluid containing varying amounts of the aqueous amine modified acidic composition prepared in accordance with the procedure of Example I and technical grade hydrochloric acid. Natural $CaCO_3$ was ground and sieved to fall into the 20-40 mesh range. 1 gram of the $CaCO_3$ was added to 100 ml of the acid mixture in a reaction vessel thermostated at the correct temperature. The reaction was timed until no more $CO_2$ bubbles could be seen escaping from the solid particles. Timing was done with an electronic stop watch accurate to $\pm0.1$ second. The results of the before-mentioned procedures are tabulated in Table I below.

## TABLE I

### Temperature

| % HCl | 25°C | 40°C | 55°C | 70°C |
|-------|------|------|------|------|
| 10    | 280  | 181  | 103  | 65   |
| 15    | 211  | 124  | 68   | 48   |
| 30    | 135  | 71   | 37   | 24   |
| 50    | 111  | 51   | 26   | 16   |
| 80    | 102  | 51   | 28   | 9    |

All times are in second and are the average of duplicate runs.

If the percentage of HCl was below 10%, the $CaCO_3$ did not disappear at any temperature examined.

- 31 - 0125191

## EXAMPLE VII

A series of experiments were conducted to determine the reactivity of Berea sandstone with (1) the aqueous amine modified acidic compositions prepared in accordance with the procedures of Example I; (2) with a resulting aqueous treating fluid containing varying amounts of the aqueous amine modified acidic composition, hydrochloric acid and hydrofluoric acid; and (3) an acidic mixture containing 80 percent hydrochloric acid and 20 percent hydrofluoric acid. The purpose of these experiments was to determine the percent of sand dissolved as a function of time, temperature, and acid composition.

In carrying out the experiments a piece of Berea sandstone core was ground to a powder. No attempt was made to mesh the sand. It appeared to be in the 60-80 mesh range. One gram of sand was added to 100 ml of the appropriate acid mixture in a thermostatted inert plastic bottle. The bottle was removed from the thermostat after the appropriate time period and the reaction quenched in ice water. The sand was then filtered off on to a previously weighed fritted filter, dried in the oven at 110°C for one hour and weighed. During the reaction time, the bottles were continuously agitated with a shaker so as to expose new sand surface to the acid. The results of the experiments are tabulated in Table II on the following page; and the data reported are the average of two duplicate measurements under each set of conditions.

# TABLE 2

### TEMPERATURE

| Time (hr) | 21°C | | | | 54.4°C | | | |
|---|---|---|---|---|---|---|---|---|
| | Composition | | | | Composition | | | |
| | 100%AT | 85%AT 12%HCl 3%HF | 40%AT 50%HCl 10%HF | 80%HCl 20%HF | 100%AT | 85%AT 12%HCl 3%HF | 40%AT 50%HCl 10%HF | 80%HCL 20%HF |
| | Percent of Sand Dissolved | | | | Percent of Sand Dissolved | | | |
| 0.5 | 0.65 | 13.2 | 20.0 | 31.8 | 1.1 | 17.1 | 28.7 | 43.3 |
| 1.0 | 0.71 | 15.1 | 32.0 | 36.4 | 1.3 | 16.9 | 38.6 | 64.1 |
| 2.0 | 0.97 | 18.9 | 36.5 | 42.2 | 2.5 | 19.7 | 57.8 | 83.7 |
| 4.0 | 0.84 | 20.1 | 45.0 | 54.0 | 2.1 | 27.7 | 72.4 | 96.0 |
| 6.0 | 0.93 | 21.6 | 58.0 | 61.8 | 2.2 | 31.0 | 86.3 | 98.8 |

0125191

The data reported in Examples VI and VII indicate that the aqueous amine modified acidic composition as prepared using the procedure of Example I, and resulting treating fluids comprising a mixture of the aqueous amine modified acidic composition and inorganic acids, such as HCl and HF, have applicability in matrix acidizing and fracture acidizing. Further, the data set forth in Table 2 of Example VII indicates:

(1) The mixtures of the aqueous amine modified acidic composition, HCl and HF have a slower reaction time than any HCL/HF combination tested.

(2) The mixtures of the aqueous amine modified acidic composition, HCl and HF continue to dissolve Berea sandstone after six hours.

This behavior of the mixture of the aqueous amine modified composition, HCl and HF can be used to advantage in matrix and fracture acidizing because the slower reaction time implies some form of retarding action without inhibitors. This retardation can allow:

(a) deeper matrix penetration;

(b) deeper fracture penetration;

(c) long injection times; and

(d) higher fracture conductivity.


## EXAMPLE VIII

A series of experiments were conducted to determine the corrosion characteristics of a mixture of HCl and the aqueous amine modified acidic composition as prepared in accordance with the procedure of Example I on standard N80 test coupons as compared to HCl/water mixture on such coupons.  In each experiment three N80 test coupons were cleaned, dried and weighed.  Thereafter, the coupons were immersed in 300 ml of test solution maintained at 180°F in a glass cell.

After the time allocated, the coupons were removed, rinsed and dried briefly in a 120° oven.  The coupons were then cooled and weighed.  Tests were run for 6, 10, and 16 hours.

The two test solutions compared contained 20%

HCl/80% of the aqueous amine modified acidic solution and

15% HCl/85% water.

The results are presented in Tables 3, 4 and 5.

The results show that the mixture of the HCl and the

aqueous amine modified acidic composition causes significantly less weight loss at 6 and 10 hours and somewhat more at 16 hours.  The mixture of the HCl and the aqueous

amine modified acidic composition also causes less pit-

ting at all times.

**TABLE 3**

Time: 6 Hours                                    Temperature: 180°F

Bath Composition:   20% (Vol) HCl + 80% Aqueous Amine Modified Acidic Composition

| No. of Sample | Weight Before | Weight After | Lost [g] | Lost % | Lost lb/ft$^2$ |
|---|---|---|---|---|---|
| 1. 348 | 38.0663 | 34.1059 | 3.9604 | 10.40 | 0.322 |
| 2. 337 | 36.2607 | 32.3809 | 3.8798 | 10.70 | 0.315 |
| 3. 341 | 35.5901 | 32.0130 | 3.5771 | 10.05 | 0.290 |
| | | | Av: 10.4 (±0.3)% | | Av. = 0.31 |

Bath Composition:   15% (Vol) HCl + 85% Water

| No. of Sample | Weight Before | Weight After | Lost [g] | Lost % | Lost lb/ft$^2$ |
|---|---|---|---|---|---|
| 1. 339 | 38.5891 | 33.1466 | 5.4425 | 14.40 | 0.442 |
| 2. 335 | 36.1135 | 30.6631 | 5.4504 | 15.09 | 0.443 |
| 3. 333 | 39.7344 | 33.9513 | 5.7831 | 14.55 | 0.470 |
| | | | Av: 14.6 (±0.5)% | | Av. = 0.45 |

TABLE 4

Time: 10 Hours                                                      Temperature: 180°F

Bath Composition: 20% (Vol) HCl + 80% Aqueous Amine Modified Acidic Composition

|  | No. of Sample | Weight | | Lost | | |
|---|---|---|---|---|---|---|
|  |  | Before | After | [g] | % | lb/ft$^2$ |
| 1. | 332 | 35.9265 | 31.7405 | 4.4860 | 11.65 | 0.340 |
| 2. | 344 | 36.0152 | 31.4433 | 4.5719 | 12.69 | 0.315 |
| 3. | 349 | 37.4702 | 32.7850 | 4.6852 | 12.50 | 0.380 |
|  |  |  |  | Av: 12.3 ($\pm$0.5)% |  | Av. = 0.36 |

Bath Composition: 20% (Vol) HCl + 85 Water

|  | No. of Sample | Weight | | Lost | | |
|---|---|---|---|---|---|---|
|  |  | Before | After | [g] | % | lb/ft$^2$ |
| 1. | 338 | 36.2116 | 31.1486 | 5.0630 | 13.98 | 0.411 |
| 2. | 346 | 38.0275 | 32.8994 | 5.1281 | 13.49 | 0.416 |
| 3. | 336 | 40.0547 | 34.3295 | 5.7252 | 14.29 | 0.465 |
|  |  |  |  | Av: 13.9 ($\pm$0.5)% |  | Av. = 0.43 |

## TABLE 5

Time: 16 Hours                                          Temperature: 180°F

Bath Composition: 20% (Vol) HCl + 80% Aqueous Amine Modified Acidic Composition

| No. of Sample | Weight | | Lost | | |
| | Before | After | [g] | % | lb/ft$^2$ |
|---|---|---|---|---|---|
| 1. | 334 | 36.9186 | 31.1083 | 5.8103 | 15.74 | 0.472 |
| 2. | 345 | 40.0407 | 34.1446 | 5.8961 | 14.73 | 0.479 |
| 3. | 342 | 38.5952 | 32.6426 | 5.9526 | 15.42 | 0.483 |

Av: 15.3 ($\pm$0.5)%    Av. = 0.48

Bath Composition: 20% (Vol) HCl + 85% Water

| No. of Sample | Weight | | Lost | | |
| | Before | After | [g] | % | lb/ft$^2$ |
|---|---|---|---|---|---|
| 1. | 343 | 41.4080 | 35.8925 | 5.5155 | 13.32 | 0.448 |
| 2. | 347 | 38.9810 | 33.6339 | 5.3471 | 13.72 | 0.434 |
| 3. | 350 | 37.6960 | 32.4412 | 5.2548 | 13.94 | 0.427 |

Av: 13.7 ($\pm$0.3)%    Av. = 0.44

The previous data clearly indicates the following:

(1) Up to 12 hours the mixture of the HCl and the aqueous amine modified acidic composition is significantly less corrosive than the 15% HCl mixture.

(2) At times in excess of 12 hours, the mixture of the HCl and the aqueous amine modified acidic composition was more corrosive than the 15% HCl mixture.

(3) In field applications, since the pumping time for the majority of field fracture applications is less than 12 hours, the diminished corrosive effect can be utilized to advantage in fracture acidizing design.

This feature of the mixture of the HCl and the aqueous amine modified acidic composition would also preclude the need for large quantities of inhibitor and their attendant cost.

It is clear that the present invention is well adapted to carry out the objects and attain the ends and advantages mentioned herein as well as those inherent in the invention. While presently preferred embodiments of the invention have been described for purposes of this disclosure, numerous changes may be made which will readily suggest themselves to those skilled in the art and which are accomplished within the spirit of the invention disclosed and as defined in the appended claims.

CLAIMS

1. An improved aqueous acidic treating fluid for use in acidizing hydrocarbon bearing subterranean formations, the aqueous acidic treating fluid comprising:

(a) an effective amount of an acidic constituent; and an effective amount of an aqueous amine modified acidic composition having a pH value of less than about 1, the aqueous amine modified acidic composition being prepared by the steps of:

(1) mixing from about 45 to about 80 weight percent hydrochloric acid with from about 20 to about 55 weight percent phosphoric acid to produce a substantially homogeneous acidic mixture;

(2) admixing the acidic mixture with an effective amount of water to provide an aqueous acidic mixture;

(3) admixing from about 2 to about 20 weight percent of a hydroxy carboxylic acid into the aqueous acidic mixture to produce a hydroxy carboxylic acid containing aqueous acidic mixture; and

(4) admixing a minor effective amount of a polyamine constituent compatible with the hydroxy carboxylic acid containing aqueous acidic mixture to provide the amine modified aqueous acidic composition; and

(b) introducing the aqueous acidic treating fluid into the subterranean formation.

2. An aqueous amine modified acidic composition having a pH value of less than about 1 for use in acidizing hydrocrbon bering subterranean formations, the aqueous amine modified acidic composition prepared by the steps of:

mixing from about 45 to about 85 weight percent hydrochloric acid with from about 15 to about 55 weight percent phosphoric acid in an acid resistant vessel for an effective period of time to provide a substantially homogeneous acidic mixture;

admixing the homogeneous acidic mixture into an effective amount of water to provide an aqueous acidic mixture;

admixing from about 2 to about 20 weight percent of a hydroxy carboxylic acid and from about 0 to about 20 weight percent of a dicarboxylic acid into the aqueous acidic mixture; and

admixing a minor effective amount of a polyamine constituent compatable with the hydroxy carboxylic acid containing aqueous acidic mixture to produce the aqueous amine modified acidic composition.

3.    A method for treating a subterranean formation comprising the steps of :

(a)    combining an effective amount of an acidic constituent with an effective amount of an aqueous amine modified acidic composition to produce an aqueous acidic treating fluid, the aqueous amine modified acidic composition being prepared by the steps of:

(1)    mixing from about 45 to about 80 weight percent hydrochloric acid with from about 20 to about 55 weight percent phosphoric acid to produce a substantially homogeneous acidic mixture;

(2)    admixing the acidic mixture with an effective amount of water to provide an aqueous acidic mixture;

(3)    admixing from about 2 to about 20 weight percent of a hydroxy carboxylic acid into the aqueous acidic mixture to produce a hydroxy carboxylic acid containing aqueous acidic mixture; and

(4)    admixing a minor effective amount of a polyamine constituent compatible with the hydroxy carboxylic acid containing aqueous acidic mixture to provide the amine modified aqueous acidic composition; and

(b)   introducing the aqueous acidic treating fluid into the subterranean formation.

4.   The method for treating a subterranean formation of claim 3 wherein the aqueous acidic mixture contains from about 70 to about 90 weight percent water.

5.   The method for treating a subterranean formation of claim 4 wherein the preparation of the aqueous amine modified acidic composition further includes the steps of :

- diluting the hydroxy carboxylic acid containing aqueous acidic mixture with an additional effective amount of water to provide the hydroxy carboxylic acid containing aqueous acidic mixture with from about 70 to about 90 weight percent water ;

- admixing up to about 20 weight percent of a dicarboxylic acid into the hydroxy carboxylic acid containing mixture prior to the addition of the polyamine;

- and wherein the amine modified acidic composition has a pH value of less than about 1 and contains from about 75 to about 80 weight percent water.

6. The method for treating a subterranean formation of claim 5 wherein the hydroxy carboxylic acid constituent of the aqueous amine modified acidic composition is selected from the group comprising citric acid and oxalic acid.

7. The method for treating a subterranean formation of claim 5 wherein the minor effective amount of the polyamine incorporated into the hydroxy carboxylic acid containing aqueous acidic mixture is from about 1 to about 5 weight percent.

8. The method for treating a subterranean formation of claim 7 wherein the polyamine is hexamethylenetetramine.

9. The method for treating a subterranean formation of claim 3 wherein the acidic constituent of the aqueous acidic treating fluid is an inorganic acid.

10. A method for treating a subterranean formation comprising :

introducing an effective amount of an aqueous amine modified acidic composition into a hydrocarbon bearing subterranean formation to substantially acidize the formation, the aqueous amine modified acidic composition prepared by the steps of:

(1) mixing from about 45 to about 80 weight percent hydrochloric acid with from about 20 to about 55 weight percent phosphoric acid to produce a substantially homogeneous acidic mixture;

(2) admixing the acidic mixture with an effective amount of water to provide an aqueous acidic mixture;

(3) admixing from about 2 to about 20 weight percent of a hydroxy carboxylic acid into the aqueous acidic mixture to produce a hydroxy carboxylic acid containing aqueous acidic mixture; and

(4) admixing a minor effective amount of a polyamine constituent compatible with the hydroxy carboxylic acid containing aqueous acidic mixture to provide the amine modified aqueous acidic composition.

CLAIMS (AUSTRIA)

1-- A method for treating a subterranean formation comprising the steps of :

(a) combining an effective amount of an acidic constituent with an effective amount of an aqueous amine modified acidic composition to produce an aqueous acidic treating fluid, the aqueous amine modified acidic composition being prepared by the steps of:

(1) mixing from about 45 to about 80 weight percent hydrochloric acid with from about 20 to about 55 weight percent phosphoric acid to produce a substantially homogeneous acidic mixture;

(2) admixing the acidic mixture with an effective amount of water to provide an aqueous acidic mixture;

(3) admixing from about 2 to about 20 weight percent of a hydroxy carboxylic acid into the aqueous acidic mixture to produce a hydroxy carboxylic acid containing aqueous acidic mixture; and

(4) admixing a minor effective amount of a polyamine constituent compatible with the hydroxy carboxylic acid containing aqueous acidic mixture to provide the amine modified aqueous acidic composition; and

(b) introducing the aqueous acidic treating fluid into the subterranean formation.

2. The method for treating a subterranean formation of claim 1 wherein the aqueous acidic mixture contains from about 70 to about 90 weight percent water.

3. The method for treating a subterranean formation of claim 2 wherein the preparation of the aqueous amine modified acidic composition further includes the steps of :

- diluting the hydroxy carboxylic acid containing aqueous acidic mixture with an additional effective amount of water to provide the hydroxy carboxylic acid containing aqueous acidic mixture with from about 70 to about 90 weight percent water ;

- admixing up to about 20 weight percent of a dicarboxylic acid into the hydroxy carboxylic acid containing mixture prior to the addition of the polyamine;

- and wherein the amine modified acidic composition has a pH value of less than about 1 and contains from about 75 to about 80 weight percent water.

4. The method for treating a subterranean formation of claim 3 wherein the hydroxy carboxylic acid constituent of the aqueous amine modified acidic composition is selected from the group comprising citric acid and oxalic acid.

5. The method for treating a subterranean formation of claim 4 wherein the minor effective amount of the polyamine incorporated into the hydroxy carboxylic acid containing aqueous acidic mixture is from about 1 to about 5 weight percent.

6. The method for treating a subterranean formation of claim 5 wherein the polyamine is hexamethylenetetramine.

7. The method for treating a subterranean formation of claim 1 wherein the acidic constituent of the aqueous acidic treating fluid is an inorganic acid.

48 0125191

8. A method for treating a subterranean formation comprising :

introducing an effective amount of an aqueous amine modified acidic composition into a hydrocarbon bearing subterranean formation to substantially acidize the formation, the aqueous amine modified acidic composition prepared by the steps of:

(1) mixing from about 45 to about 80 weight percent hydrochloric acid with from about 20 to about 55 weight percent phosphoric acid to produce a substantially homogeneous acidic mixture;

(2) admixing the acidic mixture with an effective amount of water to provide an aqueous acidic mixture;

(3) admixing from about 2 to about 20 weight percent of a hydroxy carboxylic acid into the aqueous acidic mixture to produce a hydroxy carboxylic acid containing aqueous acidic mixture; and

(4) admixing a minor effective amount of a polyamine constituent compatible with the hydroxy carboxylic acid containing aqueous acidic mixture to provide the amine modified aqueous acidic composition.